# FASCICULE DE BREVET EUROPEEN

(11) **EP 2 383 243 B1**
(45) Date de publication et mention de la délivrance du brevet: **03.04.2019**
(21) Numéro de dépôt: 11162668.5
(22) Date de dépôt: 15.04.2011
(51) Int. Cl.: C04B 35/584, G02B 1/02, B82Y 30/00

(54) **Procédé de fabrication d'un matériau composite céramique à base de nitrure de silicium et de beta-eucryptite**
Verfahren zur Herstellung von einem keramischen Verbundwerkstoff auf Basis von Siliziumnitrid und Beta-Eukryptit
Method of making a composite ceramic material based on silicon nitride and beta-eucryptite

(30) Priorité: 30.04.2010 FR 1001865
(43) Date de publication de la demande: 02.11.2011
(73) Titulaire: Thales, 92400 Courbevoie (FR); Centre National de la Recherche Scientifique, 75016 Paris (FR)
(72) Inventeur: Blanchard, Laurent, 06370 Mouans-Sartoux (FR); Fantozzi, Gilbert, 69330 Meyzieu (FR); Pelletant, Aurélien, 69100 Villeurbanne (FR); Reveron, Helen, 69006 Lyon (FR); Chevalier, Jérôme, 69140 Rillieux La Pape (FR); Vitupier, Yann, 06250 Mougins (FR)
(74) Mandataire: Esselin, Sophie

(56) Documents cités:
- JP-A- 2001 302 339
- JP-A- 2003 292 371
- MATOVIC B ET AL: "Dilatometric study of Si3N4-LAS system", CERAMICS-SILIKATY, XX, PRAGUE, CZ, vol. 51, no. 4, 1 janvier 2007 (2007-01-01), pages 210-212, XP008128486, ISSN: 0862-5468

## Description

Le domaine de l'invention est celui de la conception des matériaux convenant à la réalisation d'éléments optiques pour les applications spatiales, tels que les miroirs, et à la réalisation des structures optiques (aussi appelées éléments structuraux) dont la fonction est d'assurer le positionnement et le support des éléments optiques.

La tendance générale dans l'observation spatiale est à l'augmentation du diamètre des miroirs tant pour les futures missions scientifiques d'observation de l'univers que pour l'observation de la Terre depuis l'orbite géostationnaire, par exemple. Ainsi, dans un avenir proche, nous allons avoir besoin de matériaux extrêmement stables, autorisant de forts allègements tout en étant rigides et résistants et qui permettront la réalisation de miroirs de diamètre supérieur à 2 m avec des masses surfaciques inférieures à 25 kg.m⁻². Pour obtenir des miroirs stables du point de vue dimensionnel, on cherche des matériaux possédant un très faible coefficient de dilatation thermique CTE (en référence à l'expression anglo-saxonne "coefficient of thermal expansion").

Les structures optiques telles que les structures de télescopes sont elles aussi soumises à de très fortes exigences en termes de stabilité dimensionnelle pour pouvoir garantir la qualité image et notamment pour conserver les alignements réalisés au sol entre les éléments optiques durant le tir et l'intégralité de la mission. De plus, leurs dimensions croissantes requièrent des matériaux autorisant de forts allègements tout en étant rigides et résistants.

Plus particulièrement, on cherche à obtenir des matériaux présentant un coefficient de dilatation thermique et des propriétés mécaniques convenant aux applications optiques dans le domaine spatial. Par coefficient de dilatation thermique convenant aux applications spatiales, on entend un coefficient de dilatation thermique inférieur à 1,3.10⁻⁶K⁻¹ au voisinage de la température ambiante et/ou aux basses températures (T<150 K). Par matériau présentant propriétés mécaniques convenant aux applications aérospatiales, on entend un matériau présentant un module d'Young élevé, c'est-à-dire supérieur à 100 GPa et une contrainte à la rupture mesurée en flexion élevée, c'est-à-dire supérieure à 100 MPa.

Le nitrure de silicium (Si₃N₄) est un très bon candidat pour ces applications car il présente de bonnes propriétés mécaniques. Il présente notamment un module d'Young élevé, environ égal à 320 GPa et une contrainte à la rupture mesurée en flexion élevée c'est-à-dire supérieure à 700 MPa. Toutefois le nitrure de silicium présente un coefficient de dilatation thermique non nul et légèrement positif.

La β-eucryptite est un aluminosilicate de lithium ou Lithium Alumino-Silicate défini couramment par l'acronyme LAS, dont la composition est la suivante : (Li₂O)ₓ (Al₂O₃)_{y} (SiO₂)_{z} où x, y et z sont les fractions molaires respectives d'oxyde de lithium Li₂O, d'alumine Al₂O₃ et de silice SiO₂. Les fractions molaires respectives de la β-eucryptite sont les suivantes : x=1, y=1 et z=2.

La β-eucryptite présente la particularité de posséder un coefficient de dilatation thermique fortement négatif, c'est-à-dire qu'elle se contracte sous l'effet d'une élévation de température. Le coefficient de dilatation thermique d'un polycristal micrométrique ou nanométrique de β-eucryptite est de l'ordre de -8.10⁻⁶ K⁻¹ (K correspondant au Kelvin). Lorsque la β-eucryptite est incorporée dans une matrice de nitrure de silicium, elle a tendance à abaisser le coefficient de dilatation du composite ainsi réalisé.

On connaît un procédé de fabrication d'un matériau composite céramique fritté comprenant une étape de mélange, dans une solution aqueuse ou alcoolique, de poudres de β-eucryptite et de nitrure de silicium. Le mélange est ensuite porté à une température permettant le frittage du nitrure de silicium. Le document JP2003292371 montre un procédé de fabrication d'un matériau composite céramique fritté à base de nitrure de silicium et de beta-eucryptite, comprenant une étape de réalisation d'un premier mélange d'une poudre de nitrure de silicium cristalline et d'une poudre d'un premier aluminosilicate de lithium cristallin dont la composition est la suivante: a(Li₂O)*b(Al₂O₃)*c(SiO₂).

La demanderesse a constaté, sans réaliser de divulgation, qu'il n'est pas possible d'obtenir, à partir de ce procédé connu, un composite présentant une stabilité dimensionnelle et des propriétés mécaniques convenant aux applications optiques dans le domaine spatial. En effet, on peut obtenir, à partir du procédé connu, un matériau présentant un coefficient de dilatation convenant aux applications spatiales à partir d'un mélange de nitrure de silicium et de β-eucryptite uniquement si le mélange comporte une proportion massique de β-eucryptite au moins égale à 60%. Or, la β-eucryptite qui présente un module d'Young de l'ordre 70GPa abaisse les propriétés mécaniques du composite par rapport à celles du nitrure de silicium. Le matériau composite obtenu présente des propriétés mécaniques incompatibles avec les applications optiques dans le domaine spatial.

Le but de la présente invention est de proposer un procédé de fabrication d'un composite céramique fritté présentant une stabilité dimensionnelle compatible avec les applications spatiales ainsi que de bonnes propriétés mécaniques permettant de réaliser des éléments et des structures optiques de grande taille.

La demanderesse a constaté que lors du frittage d'une matrice nitrure de silicium dans laquelle sont dispersées des particules cristallines de β-eucryptite, des réactions entre la silice et le nitrure de silicium surviennent. Ces réactions forment des oxynitrures de silicium. Elles ont pour effet de modifier la composition de la β-eucryptite. Le composite obtenu ne contient plus uniquement de la β-eucryptite mais aussi des aluminosilicates de lithium LAS différents de la β-eucryptite. Un aluminosilicate de lithium LAS dont la composition est la suivante : (Li₂O)ₓ (Al₂O₃)_{y} (SiO₂)_{z} est différent de la β-eucryptite lorsque l'ensemble des fractions molaires (x, y, z) est différent de (1, 1, 2). Or, un aluminosilicate de lithium présente un coefficient de dilatation thermique très négatif uniquement lorsque sa composition est celle de la β-eucryptite. Ainsi, le procédé de l'art antérieur permet d'obtenir un coefficient de dilatation thermique aussi faible que souhaité uniquement à partir d'une grande quantité de β-eucryptite.

La demanderesse a aussi constaté que lors du frittage d'une matrice nitrure de silicium dans laquelle sont dispersées des particules cristallines de β-eucryptite, une fusion des particules de β-eucryptite a lieu. La β-eucryptite obtenue après refroidissement est donc sous forme amorphe. Or, la β-eucryptite sous forme amorphe présente un coefficient de dilatation thermique plus élevé que sous sa forme cristalline.

Ainsi, l'invention a pour objet un procédé de fabrication d'un matériau composite céramique fritté à base de nitrure de silicium et de β-eucryptite comprenant une étape de réalisation d'un premier mélange d'une poudre de nitrure de silicium sous forme cristalline et d'une poudre d'un premier aluminosilicate de lithium sous forme cristalline dont la composition est la suivante (Li2O)x (Al2O3)y (SiO2)z, dans lequel la composition d'aluminosilicate de lithium est telle que l'ensemble des fractions molaires (x, y, z) est différent de l'ensemble (1 ,1, 2).

Le procédé comprend un premier traitement thermique d'un composite de nitrure de silicium et du premier aluminosilicate de lithium obtenu à partir du premier mélange pour fritter le nitrure de silicium et obtenir un composite céramique à base de nitrure de silicium et de β-eucryptite.

Le premier traitement thermique est réalisé à une première température supérieure à la température de fusion de la β-eucryptite dans les conditions opératoires du premier traitement thermique.

Le procédé comprend un deuxième traitement thermique pour cristalliser la β-eucryptite, ultérieurement au premier traitement thermique.

Le deuxième traitement thermique comprend une étape de nucléation à une température de nucléation comprise entre 600°C et 680°C pendant une durée comprise entre 2h et 10h et une étape de croissance de germes à une température de croissance supérieure à la température de nucléation, la température de croissance étant comprise entre 680°C et 720°C.

Selon une variante de l'invention, le deuxième traitement thermique est réalisé après avoir laissé refroidir le composite céramique obtenu après le frittage.

Selon une variante de l'invention, le procédé comprend préalablement à l'étape de mélange de la poudre de nitrure de silicium et du premier aluminosilicate de lithium, une étape de lavage d'une première poudre de nitrure de silicium pour éliminer la silice polluant la première poudre de nitrure de silicium.

Selon une variante de l'invention, le procédé comprend une étape de fabrication d'une poudre du premier aluminosilicate de lithium comprenant :
- une étape de réalisation d'un mélange de poudres de carbonate de lithium, d'alumine et de silice dans des proportions adaptées pour obtenir le premier aluminosilicate de lithium,
- une étape de calcination d'une poudre issue dudit mélange pour obtenir le premier l'aluminosilicate de lithium.

Selon une variante de l'invention, l'étape de calcination comprend une étape de montée en température jusqu'à une température maximale suivie d'une étape de diminution de la température débutant dés que la température à atteint la température maximale.

Selon une variante de l'invention, les cristaux de la poudre de nitrure de silicium sont de taille nanométrique ou micrométrique et les cristaux de la poudre du premier aluminosilicate de lithium sont de taille nanométrique ou micrométrique.

Le procédé selon l'invention permet de s'assurer qu'on obtient un composite fritté à base de β-eucryptite et non à base d'un LAS différent de la β-eucryptite. On peut ainsi obtenir des composites présentant un très faible coefficient de dilatation, voire un coefficient de dilatation nul, et présentant en outre des propriétés mécaniques compatibles avec des applications optiques dans le domaine spatial.

D'autres caractéristiques et avantages de l'invention apparaîtront à la lecture de la description détaillée qui suit, faite à titre d'exemple non limitatif et en référence aux dessins annexés dans lesquels :
- la figure 1 est un ordinogramme représentant les étapes du procédé selon l'invention,
- la figure 2 est un ordinogramme représentant les étapes d'un exemple de procédé pour synthétiser un LAS utilisé dans le procédé selon l'invention.

D'une figure à l'autre, les mêmes éléments sont repérés par les mêmes références.

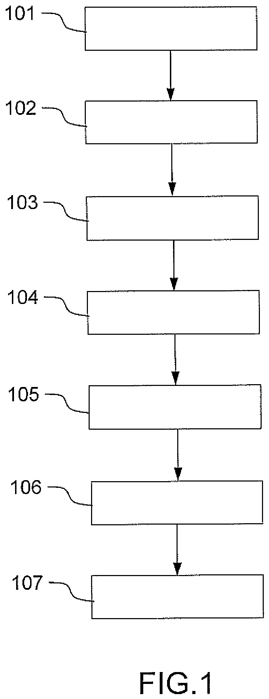

Les étapes du procédé de fabrication d'un matériau composite céramique à base de nitrure de silicium fritté et de β-eucryptite selon l'invention sont représentées sur la figure 1.

Le procédé selon l'invention comprend une étape de réalisation d'un premier mélange en solution 101 d'une poudre d'un premier aluminosilicate de lithium LAS à l'état cristallin (en référence à l'expression anglo-saxonne "Lithium-Alimino-Silicate") dont la composition est différente de celle de la β-eucryptite avec une poudre de nitrure de silicium sous forme cristalline et éventuellement des additifs. Le premier mélange est, par exemple, réalisé en dispersion aqueuse ou alcoolique.

On utilise, de préférence, des poudres présentant des particules micrométriques ou nanométriques de LAS et de nitrure de silicium.

En ajoutant de faibles quantités de LAS par rapport à la quantité de nitrure de silicium, on conserve des propriétés mécaniques proches de celle du nitrure de silicium.

On utilise éventuellement des additifs tels que des aides au frittage qui sont, par exemple, du type Al₂O₃+Y₂O₃, Y₂O₃+MgO, Li₂O-Y₂O₃, MgO, ou Y₂O₃.

L'étape de mélange est, par exemple, une étape de dispersion. Cette étape permet de disperser le premier LAS. Cette étape est, par exemple, réalisée en passant le premier mélange au tourne-jarre. La barbotine ainsi obtenue est ensuite moulée 102. Il est ainsi possible de réaliser des formes diverses telles que des tubes ou de simples plaques en choisissant une forme de moule adapté.

Le composite obtenu est séché 104. Le séchage est, par exemple, réalisé à l'étuve. L'étape de séchage est avantageusement réalisée après le démoulage de la pièce 103.

En variante, la barbotine obtenue lors de l'étape 101 est séchée (par exemple, par atomisation et granulation, ajout de liants et plastifiants) puis pressée par une méthode de pressage à froid ou à chaud.

En variante, le mélange n'est pas réalisé en solution mais en voie sèche, par exemple au tourne jarre, puis pressé par une méthode de pressage à froid ou à chaud.

A ce stade, la pièce obtenue par coulage ou pressage à froid peut être usinée afin de lui conférer une géométrie complexe. Il est, par exemple, possible de pratiquer des évidements au sein du cru pour alléger la pièce.

Un traitement thermique préalable 105 est avantageusement réalisé pour délianter le cru, c'est-à-dire faire disparaître le liant organique utilisé pour obtenir un bon compactage des poudres, à une température préalable Tp pendant une durée Dp.

Le traitement thermique préalable 105 consiste, par exemple, à porter la pièce à une température de 600°C et à la maintenir à cette température pendant une heure. La montée et/ou la descente en température suivent, par exemple, une progression de 1°C/min.

On réalise ensuite le frittage 106 du nitrure de silicium en réalisant un premier traitement thermique du premier matériau composite obtenu qui est à base de nitrure de silicium et du premier aluminosilicate de lithium. Le premier traitement thermique consiste à porter et maintenir le premier composite à une première température T1 pendant une première durée D1. La montée en température est éventuellement réalisée avec l'assistance d'une pression gazeuse ou mécanique. Le premier traitement thermique est avantageusement réalisé sous une atmosphère inerte ou sous vide.

La montée en température peut être réalisée par chauffage radiatif ou courant pulsé ou micro-ondes. La première température T1 est choisie pour permettre le frittage du nitrure de silicium. La première température T1 est supérieure à la température de fusion de la β-eucryptite dans les conditions opératoires (en termes de pression, vitesse de montée en température, courant, temps de maintien à la température de frittage). A titre d'exemple, la température de fusion de la β-eucryptite de l'ordre 1340°C dans les conditions de frittage naturelles. La température de frittage est par exemple supérieure à 1340°C. On applique T1 pendant une durée comprise par exemple entre 0h et 12h.

Pendant le frittage 106, surviennent des réactions entre la silice contenue dans le premier aluminosilicate de lithium et le nitrure de silicium.

Pour contrer cet effet, la composition du premier aluminosilicate de lithium est choisie avec un excès ou un déficit de silice par rapport à la composition de la β-eucryptite de manière à ce que cet excès ou déficit corresponde précisément à la quantité de silice qui réagit avec le nitrure de silicium lors du frittage. Le choix d'une composition excédentaire ou déficitaire en silice dépend de la composition en silice de la poudre de nitrure de silicium du départ. Ainsi, on obtient après frittage 106, un matériau composite céramique fritté à base de nitrure de silicium et de β-eucryptite. On prévoit un premier aluminosilicate de lithium présentant un déficit de silice par rapport à la β-eucryptite dans le cas où la quantité de silice présente dans la poudre de nitrure de silicium est plus importante que celle qui réagit lors du frittage. On prévoit un excès de silice lorsque la quantité de silice présente dans la poudre de nitrure de silicium est moins importante que celle qui réagit lors du frittage.

Il est également possible de réaliser, préalablement à l'étape de mélange 101 du nitrure de silicium et du premier LAS, un lavage d'une première poudre de nitrure de silicium, afin d'éliminer la couche superficielle de silice qui pollue classiquement les poudres de nitrure de silicium. On obtient la poudre de nitrure de silicium que l'on mélange 101 avec le premier aluminosilicate de lithium. Le lavage est, par exemple, réalisé avec de l'acide, par exemple l'acide fluorhydrique, l'acide chlorhydrique, ou un mélange d'acides. En supposant qu'à l'issue du lavage, le nitrure de silicium ne contient plus de silice, il suffit d'ajuster la composition du premier aluminosilicate de lithium avec un léger excès de silice par rapport à la β-eucryptite, l'excès correspondant à la quantité de silice qui réagit avec le nitrure de silicium. En réalisant cette étape préalable de lavage, la composition du premier LAS est plus facile à ajuster car il n'est pas nécessaire d'évaluer la quantité de silice présente au sein du nitrure de silicium. Seule la proportion de silice réagissant avec le nitrure de silicium doit être compensée.

Plus la taille des cristaux de nitrure de silicium est importante, plus la température de frittage de ce matériau est élevée. Pour abaisser au maximum la première température T1, il peut être avantageux d'utiliser des poudres de nitrure de silicium de taille nanométrique. Cela permet en outre de réduire l'importance de la réaction entre la silice et le nitrure de silicium.

La température de fusion de la β-eucryptite est comprise entre 1340°C et 1380°C. L'étape de frittage 106 du nitrure de silicium provoque la fonte de la β-eucryptite. La fonte de la β-eucryptite permet le frittage en phase liquide du nitrure de silicium. Toutefois, lorsque la β-eucryptite fondue refroidit, elle reste amorphe. La β-eucryptite ne possède pas un coefficient de dilatation thermique aussi faible à l'état amorphe qu'à l'état cristallin.

Pour améliorer la stabilité dimensionnelle du matériau composite céramique fritté obtenu lors du frittage du nitrure de silicium (c'est-à-dire pour abaisser son coefficient de dilatation thermique), on prévoit un deuxième traitement thermique 107 pour cristalliser tout ou partie de la β-eucryptite. Ce traitement thermique est réalisé en portant et en maintenant le composite céramique obtenu après le frittage à au moins une deuxième température T2 comprise entre 500°C et 800°C. Ces températures sont déterminées par analyse thermique différentielle de la phase vitreuse LAS obtenue par fusion et trempe de la β-eucryptite avec des fractions molaires: x=1, y=1 et z=2.

Ce deuxième traitement thermique 107 permet d'obtenir de la β-eucryptite majoritairement sous forme cristalline présentant un coefficient de dilatation thermique négatif. Cette étape permet d'abaisser le coefficient thermique d'expansion du composite céramique. On obtient un matériau composite qui est une céramique cristalline à base de nitrure de silicium et de β-eucryptite. La proportion relative de nitrure de silicium et de β-eucryptite au sein du composite détermine la valeur du coefficient de dilatation thermique. Plus la quantité et le taux de cristallinité de la β-eucryptite sont importants, plus le coefficient de dilatation thermique du composite est faible. L'étape de cristallisation de la β-eucryptite permettant d'obtenir de la β-eucryptite majoritairement sous forme cristalline, elle permet de limiter la quantité de LAS nécessaire dans le mélange initial pour obtenir un matériau présentant un faible coefficient de dilatation thermique et ainsi d'obtenir un matériau composite présentant des propriétés mécaniques compatibles avec les applications optiques dans le domaine spatial. Avantageusement, la proportion massique du LAS dans le mélange initial est comprise entre 0% et 25%, préférentiellement entre 10% et 15%.

Le deuxième traitement thermique 107 est avantageusement réalisé après avoir laissé la pièce refroidir suite au frittage 106.

Le deuxième traitement thermique 107 comprend une phase de nucléation à une température de nucléation comprise entre 600°C et 680°C, par exemple à 640°C, pendant une durée de nucléation. La durée de nucléation est comprise entre 2h et 10h, et est, par exemple, égale à 2h. La phase de nucléation est suivie d'une phase de croissance des germes. La phase de croissance des germes est réalisée à une température de croissance comprise entre 680°C et 720°C, par exemple à 690°C, pendant une durée de croissance. La durée de croissance est, par exemple, égale à environ 10h.

Le traitement de cristallisation permet d'obtenir de la β-eucryptite cristallisée dans un nitrure de silicium fritté alors même que la température de fusion de la β-eucryptite est inférieure à la température de frittage du nitrure de silicium.

La pièce obtenue peut ensuite avantageusement être usinée et rectifiée voire polie dans le cas d'un miroir.

On obtient finalement un matériau composite dont le coefficient de dilatation du composite est inférieur à celui du nitrure de silicium originel et peut être ajusté précisément en fonction du rapport volumique entre le premier LAS et le nitrure de silicium mais aussi par la durée du deuxième traitement thermique qui détermine le taux de cristallinité des particules de β -eucryptite.

De manière à améliorer les propriétés de conduction thermique de ce matériau, il peut être envisagé de prévoir une étape d'ajout de particules supplémentaires telles que des nanotubes de carbone, par exemple. Cet ajout est réalisé durant la phase de mélange 101 du nitrure de silicium et de la *β*-eucryptite.

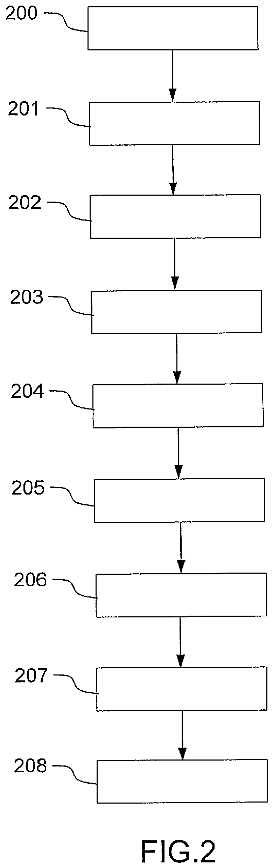

Sur la figure 2, on a représenté les étapes d'un exemple de procédé de synthèse du premier aluminosilicate de lithium LAS. Le LAS peut bien sûr être obtenu par tout autre procédé permettant de synthétiser du LAS de taille micrométrique ou nanométrique.

On réalise un mélange 200 de poudres de carbonate de lithium Li₂CO₃, d'alumine Al₂O₃ et de silice SiO₂ dans des proportions adaptées pour obtenir le premier aluminosilicate de lithium. Ce mélange est réalisé avec un excès ou un déficit de silice par rapport aux proportions qui sont nécessaires pour obtenir la β-eucryptite.

Le mélange obtenu est mis en solution aqueuse 201 à raison, par exemple, de 50% en masse du mélange. On introduit éventuellement un dispersant dans la solution, par exemple, un Polyacrylate.

On réalise, par exemple, une solution dont 50% de la masse est issue du mélange précédemment obtenu et 0,15% de la masse correspond à un dispersant. La solution est ensuite dispersée 202. La dispersion est, par exemple, réalisée au moyen d'un tourne-jarre avec des billes de zircone durant 24 h.

La barbotine obtenue est ensuite séchée 203. Le séchage est, par exemple, réalisé en étuve à 110°C. Cette opération est poursuivie jusqu'à ce que la perte de masse soit nulle.

Le procédé comprend ensuite une étape de calcination 204 de la poudre séchée à une température maximale. La fonction de l'étape de calcination est de créer les conditions pour obtenir une réaction à l'état solide entre les poudres de carbonate de lithium Li₂CO₃, d'alumine Al₂O₃ et de silice SiO₂ de sorte à obtenir le premier LAS. Avantageusement, l'étape de calcination comprend une étape de montée en température jusqu'à une température maximale Tmax puis une étape de diminution de la température débutant dés que la température maximale est atteinte. Autrement dit, on reste à la température maximale pendant un temps nul. La demanderesse a constaté que l'absence de palier de température à Tmax permet d'éviter la densification ou le frittage du premier LAS obtenu ce qui n'est pas le cas lorsque la poudre est maintenue à la température maximale pendant une durée longue. En variante, la calcination peut être réalisée jusqu'à une température maximale Tmax avec un maintien de la température pendant une durée prédéterminée si on veut utiliser une β-eucryptite de plus grande taille. Plus la longueur du palier est importante, plus la densification est importante.

La poudre séchée est, par exemple, calcinée dans un four selon le protocole suivant : montée à 1050°C à raison de 5°C.min⁻¹ puis dès la température atteinte, refroidissement à raison de 5°C.min⁻¹ jusqu'à 200°C et refroidissement naturel.

La poudre calcinée est ensuite broyée 205 en solution aqueuse pour obtenir des particules de taille nanométrique ou micrométrique. Le broyage est, par exemple, réalisé par attrition.

On réalise, par exemple, une solution aqueuse présentant 40% en masse de matière sèche. La solution aqueuse est ensuite broyée par un attriteur durant 6 h à 500 tours.min⁻¹.

La solution est ensuite séchée 206.

Le séchage est, par exemple, réalisé au moyen d'un évaporateur rotatif à 70°C sous une pression de 300mbar.

La poudre de LAS est finalement broyée 207 et tamisée 208.

## Revendications

1. Procédé de fabrication d'un matériau composite céramique fritté à base de nitrure de silicium et de β-eucryptite comprenant une étape de réalisation d'un premier mélange (101) d'une poudre de nitrure de silicium sous forme cristalline et d'une poudre d'un premier aluminosilicate de lithium sous forme cristalline dont la composition est la suivante (Li2O)x (Al2O3)y (SiO2)z, **caractérisé en ce que** la composition d'aluminosilicate de lithium est telle que l'ensemble des fractions molaires (x, y, z) est différent de l'ensemble (1, 1, 2),
le procédé comprenant un premier traitement thermique (106) d'un composite de nitrure de silicium et du premier aluminosilicate de lithium obtenu à partir du premier mélange pour fritter le nitrure de silicium et obtenir un composite céramique à base de nitrure de silicium et de β-eucryptite, le premier traitement thermique (106) étant réalisé à une première température supérieure à la température de fusion de la β-eucryptite dans les conditions opératoires du premier traitement thermique, le procédé comprenant, ultérieurement au premier traitement thermique (106), un deuxième traitement thermique (107) pour cristalliser la β-eucryptite, le deuxième traitement thermique (107) comprenant une étape de nucléation à une température de nucléation comprise entre 600°C et 680°C pendant une durée comprise entre 2h et 10h et une étape de croissance de germes à une température de croissance supérieure à la température de nucléation, la température de croissance étant comprise entre 680°C et 720°C.

2. Procédé de fabrication selon la revendication précédente, comprenant, préalablement à l'étape de mélange (101) de la poudre de nitrure de silicium et du premier aluminosilicate de lithium, une étape de lavage d'une première poudre de nitrure de silicium pour éliminer la silice polluant la première poudre de nitrure de silicium

3. Procédé de fabrication selon l'une quelconque des revendications précédentes, comprenant une étape de fabrication d'une poudre du premier aluminosilicate de lithium comprenant :
- une étape de réalisation (200) d'un mélange de poudres de carbonate de lithium, d'alumine et de silice dans des proportions adaptées pour obtenir le premier aluminosilicate de lithium,
- une étape de calcination (204) d'une poudre issue dudit mélange pour obtenir le premier l'aluminosilicate de lithium.

4. Procédé de fabrication selon la revendication précédente, dans laquelle l'étape de calcination (204) comprend une étape de montée en température jusqu'à une température maximale suivie d'une étape de diminution de la température débutant dés que la température à atteint la température maximale.

5. Procédé de fabrication selon l'une quelconque des revendications précédentes, dans lequel les cristaux de la poudre de nitrure de silicium sont de taille nanométrique ou micrométrique et dans lequel les cristaux de la poudre du premier aluminosilicate de lithium sont de taille nanométrique ou micrométrique.

6. Procédé de fabrication selon l'une quelconque des revendications précédente, dans lequel le deuxième traitement thermique est réalisé après avoir laissé refroidir la pièce suite au frittage.

7. Procédé de fabrication selon l'une quelconque des revendications précédentes, dans lequel a proportion massique du premier aluminosilicate de lithium dans le mélange initial est comprise entre 0% et 25%.

8. Procédé de fabrication selon l'une quelconque des revendications précédentes, dans lequel la proportion massique du premier aluminosilicate de lithium dans le mélange initial est comprise entre 10% et 15%.

9. Procédé de fabrication selon l'une quelconque des revendications précédentes, dans lequel la proportion massique du premier aluminosilicate de lithium dans le mélange initial est comprise entre 10% et 25%.

## Patentansprüche

1. Verfahren zur Herstellung eines keramischen, gesinterten Verbundwerkstoffs auf der Grundlage von Siliziumnitrid und β-Eukryptit, beinhaltend einen Schritt der Durchführung einer ersten Mischung (101) eines Siliziumnitridpulvers in kristalliner Form und eines Pulvers eines ersten Lithiumaluminosilikates in kristalliner Form mit folgender Zusammensetzung (Li₂O)ₓ (Al₂O₃)_{y} (SiO₂)_{z}, **dadurch gekennzeichnet, dass** die Lithiumaluminosilikat-Zusammensetzung so gestaltet ist, dass die Gruppe der Molfraktionen (x, y, z) sich von der Gruppe (1, 1, 2) unterscheidet,
wobei das Verfahren eine erste Wärmebehandlung (106) eines Verbundstoffs aus Siliziumnitrid und aus dem ersten Lithiumaluminosilikat beinhaltet, welches anhand der ersten Mischung erzielt wurde, um das Siliziumnitrid zu sintern und einen keramischen Verbundstoff auf der Grundlage von Siliziumnitrid und β-Eukryptit zu erzielen, wobei die erste Wärmebehandlung (106) bei einer ersten Temperatur durchgeführt wird, welche die Schmelztemperatur des β-Eukryptits unter den Durchführungsbedingungen der ersten Wärmebehandlung überschreitet, wobei das Verfahren nach der ersten Wärmebehandlung (106) eine zweite Wärmebehandlung (107) beinhaltet, um das β-Eukryptit zu kristallisieren, wobei die zweite Wärmebehandlung (107) einen Schritt des Nukleierens bei einer Nukleierungstemperatur beinhaltet, welche zwischen 600°C und 680°C über eine Dauer zwischen 2 Stunden und 10 Stunden beträgt und einen Schritt des Wachstums von Keimen bei einer Wachstumstemperatur, welche die Nukleirungstemperatur überschreitet, wobei die Wachstumstemperatur zwischen 680°C und 720°C beträgt.

2. Herstellungsverfahren nach dem vorherigen Anspruch, welches vor dem Schritt des Mischens (101) des Siliziumnitridpulvers und des ersten Lithiumaluminosilikates einen Schritt des Waschens eines ersten Siliziumnitridpulvers beinhaltet, um das Silizium zu beseitigen, welches das erste Siliziumnitridpulver verunreinigt.

3. Herstellungsverfahren nach einem der vorhergehenden Ansprüche, welches einen Schritt des Herstellens eines Pulvers des ersten Lithiumaluminosilikates beinhaltet, welcher Folgendes beinhaltend:
- einen Schritt der Durchführung (200) einer Mischung von Pulvern aus Litihumcarbonat, Aluminiumoxid und Silizium in geeigneten Proportionen, um das erste Lithiumaluminosilikat zu erzielen,
- einen Schritt des Kalzinierens (204) eines aus der Mischung stammenden Pulvers, um das erste Lithiumaluminosilikat zu erzielen.

4. Herstellungsverfahren nach dem vorherigen Anspruch, bei welchem der Schritt des Kalzinierens (204) einen Schritt des Temperaturanstiegs bis zu einer Höchsttemperatur beinhaltet, gefolgt von einem Schritt der Temperaturverringerung, welcher beginnt, sobald die Temperatur die Höchsttemperatur erreicht hat.

5. Herstellungsverfahren nach einem der vorhergehenden Ansprüche, bei welchem die Kristalle des Siliziumnitridpulvers eine nanometrische oder mikrometrische Größe besitzen und bei welchem die Kristalle des ersten Lithiumaluminosilikatpulvers eine nanometrische oder mikrometrische Größe besitzen.

6. Herstellungsverfahren nach einem der vorhergehenden Ansprüche, bei welchem die zweite Wärmebehandlung erfolgt, nachdem man das Teil nach dem Sintern hat abkühlen lassen.

7. Herstellungsverfahren nach einem der vorhergehenden Ansprüche, bei welchem der Masseanteil des ersten Lithiumaluminosilikates in der anfänglichen Mischung zwischen 0 % und 25 % beträgt.

8. Herstellungsverfahren nach einem der vorhergehenden Ansprüche, bei welchem der Masseanteil des ersten Lithiumaluminosilikates in der anfänglichen Mischung zwischen 10 % und 15% beträgt.

9. Herstellungsverfahren nach einem der vorhergehenden Ansprüche, bei welchem der Masseanteil des ersten Lithiumaluminosilikates in der anfänglichen Mischung zwischen 10 % und 25 % beträgt.

## Claims

1. Process for manufacturing a sintered ceramic composite material, based on silicon nitride and β-eucryptite, which includes a step of producing a first blend (101), consisting of a powder of silicon nitride in crystalline form and a powder of a first lithium aluminosilicate in crystalline form, the composition of which is the following: (Li₂O)ₓ (Al₂O₃)_{y} (SiO₂)_{z}, **characterized in that** the lithium aluminosilicate composition is such that the set of molar fractions (x, y, z) is different from the set (1, 1, 2),
the process including a first heat treatment (106) of a composite consisting of silicon nitride and the first lithium aluminosilicate obtained from the first blend, in order to sinter the silicon nitride and obtain a ceramic composite based on silicon nitride and β-eucryptite, the first heat treatment (106) being carried out at a first temperature above the melting temperature of β-eucryptite under the operating conditions of the first heat treatment, the process including, after the first heat treatment (106) a second heat treatment (107) to crystallize the β-eucryptite, the second heat treatment (107) including a nucleation step at a nucleation temperature comprised between 600°C and 680°C during a period comprised between 2h and 19h and a germ growth step at a growth temperature above the nucleation temperature, the growth temperature being comprised between 680°C and 720°C.

2. Manufacturing process according to the preceding claim, which includes, prior to the step of blending (101) the silicon nitride powder with the first lithium aluminosilicate, a step of washing a first silicon nitride powder in order to remove the silica contaminating the first silicon nitride powder.

3. Manufacturing process according to any one of the preceding claims, which includes a step of manufacturing a powder of the first lithium aluminosilicate, which includes :
- a step of producing (200) a powder blend of lithium carbonate, alumina and silica in suitable proportions in order to obtain the first lithium aluminosilicate;
- a step of calcining (204) a powder resulting from said blend in order to obtain the first lithium aluminosilicate.

4. Manufacturing process according to the preceding claim, in which the calcining step (204) comprises a step of raising the temperature up to a maximum temperature followed by a step of reducing the temperature starting as soon as the temperature has reached the maximum temperature.

5. Manufacturing process according to any one of the preceding claims, in which the crystals of the silicon nitride powder are of nanoscale or micron size and in which the crystals of the first lithium aluminosilicate powder are of nanoscale or micron size.

6. Manufacturing process according to any one of the preceding claims, in which the second heat treatment is carried out after letting the item cool down after the sintering.

7. Manufacturing process according to any one of the preceding claims, in which a mass proportion of the first lithium aluminosilicate in the initial blend is comprised between 0% and 25%.

8. Manufacturing process according to any one of the preceding claims, in which the mass proportion of the first lithium aluminosilicate in the initial blend is comprised between 10% and 15%.

9. Manufacturing process according to any one of the preceding claims, in which the mass proportion of the first lithium aluminosilicate in the initial blend is comprised between 10% and 25%.
